# EUROPEAN PATENT SPECIFICATION

(11) **EP 1 864 299 B1**
(45) Date of publication and mention of the grant of the patent: **03.09.2008**
(21) Application number: 06726364.0
(22) Date of filing: 10.03.2006
(51) Int. Cl.: G21F 9/12, G21F 9/28, G21F 9/30, C02F 1/28

(54) **WASTE DISPOSAL METHOD**
ABFALLBESEITIGUNGSVERFAHREN
PROCEDE D'ELIMINATION DES DECHETS

(30) Priority: 16.03.2005 GB 0505330
(43) Date of publication of application: 12.12.2007
(73) Proprietor: Nuclear Decommissioning Authority, Moor Row Cumbria CA24 3HU (GB)
(72) Inventor: ANGUS, Michael James, Seascale CA20 1PG (GB); GODFREY, Ian Hugh, Seascale CA20 1PG (GB)
(74) Representative: Harrison Goddard Foote
(86) International application number: PCT/GB2006/000867
(87) International publication number: WO 2006/097696

(56) References cited:
- US-A- 4 530 723
- US-A- 5 484 533
- US-A- 5 690 833

## Description

### Field of the Invention

The present invention relates to the treatment and storage of waste materials by encapsulation. More specifically, it is concerned with the encapsulation of nuclear waste materials and the use of said waste materials in the production of stable monolithic materials.

### Background to the Invention

Encapsulation has proved to be an especially favoured method for the disposal of certain hazardous materials; specifically it provides a suitable means for the conversion of these materials into a stable and safe form, which allows for long-term storage and/or ultimate disposal. The technique finds particular application in the nuclear industry, where the highly toxic and radioactive nature of the materials involved, and the extended timescales over which the toxicity is maintained, are the principal considerations when devising safe disposal methods.

In WO-A-03/056571, the present applicant has disclosed the use of cementitious grouting materials for the encapsulation of fine particulate sized wastes and provided details of a method for the encapsulation of fine particulate materials which comprises treating these materials with at least one microfine hydraulic inorganic filler.

The use of cement based injection grouting in the construction industry is well known from the prior art. Thus, EP-A-412913 teaches the use of a Portland Cement based grout in the consolidation of concrete structures affected by fine cracks, providing a cost-effective means of infilling both superficial and deeper fissures and cavities in such structures, including such as buildings, bridges and dams. Similarly, ZA-A-9209810 is concerned with a pumpable, spreadable grouting composition incorporating a cementitious and/or pozzolanic or equivalent material, and its application in sealing fissures and cracks, back-filling, providing mass fills in civil and mining works, or lining tunnels.

Also disclosed in the prior art are hydraulic setting compositions comprising particles of Portland Cement together with fine particles of silica fume containing amorphous silica, which are the subject of EP-A-534385 and are used in the production of concrete, mortar or grout having improved fluidity, whilst GB-A-2187727 describes a rapid gelling, hydraulic cement composition which comprises an acrylic gelling agent, a fine filler and Portland Cement, this composition being thixotropic and finding particular application in the formation of bulk infills for underground mining, and in the filling of voids and cavities in construction or civil engineering. A composition which also is useful in general building and construction work, and as an insulating material comprises a particulate filler, cellulose fibres and a cementitious binder, and is disclosed in GB-A-2117753.

Whilst the majority of these compositions of the prior art have a requirement for the addition of water, EP-A-801124 is concerned with a dry mixture, used for fine soil injection grout preparation, the mixture comprising fillers which do not react with water, cement and deflocculant; on addition of water, an agglomerate-free fine grout is formed, and this is easily injected into fine soil.

Thus, the use of such grouting materials in - primarily - civil engineering is well known, and its use in treating fine particulate sized wastes in the nuclear industry is the subject of WO-A-031056571. Subsequently, in WO-A-04/06268, it is disclosed that cured cementitious materials may advantageously be employed for the long term encapsulation of uranium and Magnox fuel elements, as well as fuel element debris and other nuclear fuels, thereby providing a product which remains stable and monolithic for many hundreds of years. Hence, there is provided a treatment method which affords much greater efficiency, convenience and safety in handling, and has a consequent beneficial effect both in terms of environmental considerations and cost, thereby satisfying a long felt need in the nuclear industry wherein the waste management of materials is receiving ever greater attention in the global drive to ensure ever higher safety standards.

However, whilst the method of WO-A-04/06268 is generally satisfactory for dealing with materials of the type described, difficulties are often encountered when uranium metal is encapsulated in cementitious materials due to corrosion of the metal, which occurs at a very rapid rate in standard cementitious materials. This, in British Patent Application No. 0408113.9, there is disclosed a method for the encapsulation of uranium metal which comprises treating the metal with an encapsulant which comprises a cementitious material and curing the cementitious material, the process additionally comprising the provision of means for the minimisation of the corrosion of the metal. Typically the provision of means for the minimisation of corrosion comprises the provision of a source of oxygen within the cement matrix, or the minimisation of the water content of the matrix.

US-A-4859367 discloses a method for the disposal of mine tailings, which frequently comprise significant quantities of salt residues, the method comprising adding the waste material to an alkali activated aluminosilicate mineral binder, such that the resulting mixture is bound together with a geopolymeric matrix and, on setting, forms a hard, monolithic solid.

All the methods of the prior art, however, rely on the provision of a cementitious material which is used in the production of a monolith in which the waste material is encapsulated. Thus, the waste material is physically constrained within the matrix provided by the cementitious material and, whilst the monoliths produced generally show excellent stability, the extent to which the waste material is securely bound within the matrix is constrained by the degree of physical restraint which is provided by the cementitious matrix.

Clearly, the stability of a monolith, and its ability to retain waste materials over a long period of time, and to prevent their leakage into the environment, could be enhanced in the event that the forces which caused the retention of these materials were to be chemical, rather than purely physical, forces. Thus, the present invention seeks to provided a means for the encapsulation of waste materials wherein the waste materials are more securely held within monoliths by virtue of chemical bonds which ensure that the waste materials are integral with, and form part of, the monoliths.

### Statements of Invention

Thus, according to a first aspect of the present invention, there is provided a method for the production of a stable monolith, said method comprising the encapsulation of waste materials in said monolith by means of chemical bond formation within the monolith, wherein said waste materials comprise aluminosilicate materials.

The method of the invention thereby provided a monolith wherein the waste material is integral with the encapsulation medium of the monolith, thus ensuring that the waste material is firmly bound within the material of the monolith and the chances of escape of the waste material occurring over time are significantly less than in cases wherein this material is retained within the monolith only by means of physical forces. Preferably, the monolith which is formed comprises a geopolymer monolith.

Thus, a second aspect of the invention provides a method for the disposal and storage of waste materials, said method comprising the production of a stable monolith in accordance with the first aspect of the invention.

Waste materials which are particularly suited to treatment in this way include those materials which may be used in the formation of cementitious monoliths. In this context, particular mention may be made of various geopolymer precursors, most particularly ion exchange materials, more specifically aluminosilicate materials. An especially preferred example of such a material is clinoptilolite.

The use of ion exchange materials for the treatment of radioactive materials has previously been reported in the literature. Thus, for example, EP-B-456382 discloses a method for the removal of radioisotope cations from an aqueous environment which includes the step of contacting the aqueous environment containing the radioisotope cations with an ion exchange material comprising a modified clinoptilolite. The present invention is now able to provide a means for the safe storage and disposal of the clinoptilolite following the contacting step with the aqueous environment containing radioisotope cations.

Thus, a preferred application of the method of the second aspect of the invention is in the treatment of radioactive waste materials. Specifically, there is envisaged a method for the encapsulation of radioactive waste materials, said method comprising the production of a stable monolith by means of chemical bond formation within the monolith.

Preferably said radioactive waste material is comprised in an ion exchange material, said ion exchange material comprises an aluminosilicate material. Most preferably, said ion exchange material comprises clinoptilolite.

Typically, the radioactive waste material is originally comprised in a liquid medium and is removed from said liquid medium by treatment of said liquid medium with said ion exchange material. Generally said liquid medium comprises an aqueous environment. Thus a particularly preferred embodiment of the present invention envisages a method for the removal of radioactive waste materials from a liquid medium, said method comprising performing, in order, the steps of:
(a) treating said liquid medium with an ion exchange material; and
(b) treating said ion exchange material according to the method of the second aspect of the invention.

The present invention thereby provides improved methods for the disposal and long term storage of radioactive waste materials.

### Description of the Invention

In the most preferred embodiment of the present invention, the waste material encapsulated in a monolith comprises a geopolymer precursor, particularly an ion exchange material, most preferably an aluminosilicate ion exchange material. In such cases, a monolithic cementitious binder material is most conveniently produced by treatment of the geopolymer precursor with a suitable curing initiator which, in the case of an ion exchange material precursor, typically comprises a silicate, preferably an alkali metal silicate such as sodium silicate. Preferably, in such situations, the ion exchange material is treated with an alkaline solution of said silicate. Most preferably, the ion exchange material is contacted with an aqueous solution of sodium silicate and sodium hydroxide. The use of a curing initiator in the method envisaged by the first aspect of the present invention promotes chemical bond formation within the monolith, thereby increasing the efficiency of the encapsulation process.

Following treatment of the ion exchange material with a silicate, the resulting mixture is allowed to cure to form a monolithic product. Typically, curing is allowed to proceed for 12-48 hours, with satisfactory results generally being obtained within 24 hours. Although not necessary to obtain satisfactory curing, it is preferred that the mixture is heated during the curing process, as this provides a faster rate of curing. Although temperatures anywhere between the ambient and several hundred degrees Celsius (e.g. 800°C) are suitable for this purpose, temperatures of up to 100°C are typically employed, with optimum results being achieved at temperatures in the region of 80°C.

The processes of the invention, when applied to the treatment of aluminosilicate ion exchange materials, result in the formation of three-dimensional amorphous aluminosilicate geopolymer networks, thereby providing monolithic products with excellent long term stability and high waste loading.

The processes of the invention find potential application to a wide range of waste treatment requirements. Most particularly, spent ion exchange beds may be treated by injection of an inorganic silicate solution in order to provide a stable monolithic product. The method of treatment thereby obviates the requirement for breaking open the cartridge or other container in which the ion exchange bed is located prior to the encapsulation treatment. The resulting product is inorganic and, therefore, more environmentally acceptable than most organic polymeric residues. Furthermore, the method of treatment overcomes the difficulties which are associated with the treatment of fine particulate wastes - such as many ion exchange materials - using cement grouts, which often segregate in such circumstances.

With specific reference to the treatment of drummed ion exchange materials, and particularly clinoptilolite, the method of the prior art requires that the material should be mixed with a mixture of Ordinary Portland Cement (OPC) and Blast Furnace Slag (BFS). However, as a consequence of the vortex which forms during mixing, and the volume of added grout, the waste bed volume in a drum is typically limited to about 70% of its capacity; thus, for example, a 500 litre drum is generally filled only to about 350 litres. By application of the methods of the present invention, however, an alkaline solution of a silicate salt may be pressure injected into the drum, thereby allowing the drum to be filled to close to its capacity, with the consequence that monoliths of much higher waste loading may be obtained by the application of the methods of the present invention.

The present invention also envisages the incorporation of geopolymer precursors, such as ion exchange materials, in a wide range of waste materials, and treatment of the resulting mixtures with solutions of curing initiators, such as silicates, in order to produce geopolymer monoliths of high stability and integrity.

The invention will now be illustrated, without limitation of its scope, by reference to the following specific examples:

### Examples

### Example 1

A geopolymer monolith was obtained by treatment of an ion exchange material comprising clinoptilolite (50 g) with an aqueous solution containing sodium silicate (composition 8.9% sodium oxide, 27.3% silica and 63.8% water; 30 g), sodium hydroxide (7 g) and distilled water (10 ml). After addition of the solution to the material, the resulting mixture was allowed to cure for 19 hours at 80°C to provide a hard, solid product of high integrity and stability.

### Example 2

A geopolymer monolith was obtained by treatment of an ion exchange material comprising clinoptilolite (50 g) with an aqueous solution containing sodium silicate (composition 8.9% sodium oxide, 27.3% silica and 63.8% water; 30 g), sodium hydroxide (10 g) and distilled water (10 ml). After addition of the solution to the material, the resulting mixture was allowed to cure for 19 hours at 80°C to again provide a hard, solid product of high integrity and stability.

## Claims

1. A method for the production of a stable monolith, said method comprising the encapsulation of waste materials in said monolith by means of chemical bond formation within the monolith, wherein said waste materials comprise aluminosilicate materials.

2. A method as claimed in claim 1 wherein said monolith comprises a geopolymer monolith.

3. A method for the disposal and storage of waste materials, said method comprising the production of a stable monolith according to the method as claimed in claim 1 or 2, wherein said waste materials comprise aluminosilicate materials.

4. A method as claimed in claim 1, 2 or 3 wherein said waste materials are capable of formation into cementitious monoliths.

5. A method as claimed in any one of claims 1 to 4 wherein said waste materials comprise geopolymer precursors.

6. A method as claimed in any preceding claim wherein said aluminosilicate materials comprise ion exchange materials.

7. A method as claimed in any preceding claim wherein said aluminosilicate materials comprise clinoptilolite.

8. A method as claimed in any preceding claim wherein said waste materials comprise radioactive waste materials.

9. A method as claimed in claim 8 wherein said radioactive waste materials are originally comprised in a liquid medium and are removed from said liquid medium by treatment of said liquid medium with said aluminosilicate materials.

10. A method as claimed in claim 9 wherein said liquid medium comprises an aqueous environment.

11. A method for the removal of radioactive waste materials from a liquid medium, said method comprising performing, in order, the steps of:
(a) treating said liquid medium with an ion exchange material; and
(b) treating said ion exchange material according to the method of claim 6.

12. A method as claimed in any one of claims 5 to 11 which comprises treating a geopolymer precursor with a curing initiator.

13. A method as claimed in claim 12 wherein said geopolymer precursor comprises an ion exchange material.

14. A method as claimed in claim 12 or 13 wherein said curing initiator comprises a silicate.

15. A method as claimed in claim 13 or 14 wherein said ion exchange material is treated with an alkaline solution of a silicate.

16. A method as claimed in any one of claims 12 to 15 wherein the treated geopolymer precursor is allowed to cure to form a monolithic product.

17. A method as claimed in claim 16 wherein curing is allowed to proceed for 12-48 hours.

18. A method as claimed in claim 16 or 17 wherein the mixture is heated during the curing process.

19. A method as claimed in claim 18 wherein a temperature of between the ambient and 800°C is employed.

20. A method as claimed in any preceding claim wherein clinoptilolite is treated with an aqueous solution containing sodium silicate, sodium hydroxide and distilled water and the resulting mixture is allowed to cure for 19 hours at 80°C to provide a hard, solid product of high integrity and stability.

## Patentansprüche

1. Verfahren zur Erzeugung eines stabilen Monolithen, wobei das Verfahren die Einkapselung von Abfallmaterialien in dem Monolithen mittels Bildung chemischer Bindungen innerhalb des Monolithen umfasst, wobei die Abfallmaterialien Aluminiumsilikatmaterialien umfassen.

2. Verfahren nach Anspruch 1, wobei der Monolith einen Geopolymer-Monolithen umfasst.

3. Verfahren zur Beseitigung und Lagerung von Abfallmaterialien, wobei das Verfahren die Erzeugung eines stabilen Monolithen nach dem Verfahren nach Anspruch 1 oder 2 umfasst, wobei die Abfallmaterialien Aluminiumsilikatmaterialien umfassen.

4. Verfahren nach Anspruch 1, 2 oder 3, wobei die Abfallmaterialien geeignet sind, zementartige Monolithe zu bilden.

5. Verfahren nach einem beliebigen der Ansprüche 1 bis 4, wobei die Abfallmaterialien Geopolymer-Vorstufen umfassen.

6. Verfahren nach einem beliebigen vorangehenden Anspruch, wobei die Aluminiumsilikatmaterialien Ionenaustauschmaterialien umfassen.

7. Verfahren nach einem beliebigen vorangehenden Anspruch, wobei die Aluminiumsilikatmaterialien Klinoptilolith umfassen.

8. Verfahren nach einem beliebigen vorangehenden Anspruch, wobei die Abfallmaterialien radioaktive Abfallmaterialien umfassen.

9. Verfahren nach Anspruch 8, wobei die radioaktiven Abfallmaterialien ursprünglich in einem flüssigen Medium enthalten sind und aus dem flüssigen Medium durch Behandlung des flüssigen Mediums mit den Aluminiumsilikatmaterialien entfernt werden.

10. Verfahren nach Anspruch 9, wobei das flüssige Medium ein wässriges Milieu umfasst.

11. Verfahren zum Entfernen radioaktiver Abfallmaterialien aus einem flüssigen Medium, wobei das Verfahren die Ausführung, der Reihe nach, folgender Schritte umfasst:
a) Behandeln des flüssigen Mediums mit einem Ionenaustauschmaterial; und
b) Behandeln des Ionenaustauschmaterials gemäß dem Verfahren des Anspruchs 6.

12. Verfahren nach einem beliebigen der Ansprüche 5 bis 11, welches die Behandlung einer Geopolymer-Vorstufe mit einem Aushärte-Initiator umfasst.

13. Verfahren nach Anspruch 12, wobei die Geopolymer-Vorstufe ein Ionenaustauschmaterial umfasst.

14. Verfahren nach Anspruch 12 oder 13, wobei der Aushärte-Initiator ein Silicat umfasst.

15. Verfahren nach Anspruch 13 oder 14, wobei das Ionenaustauschmaterial mit einer alkalischen Lösung eines Silicats behandelt wird.

16. Verfahren nach einem beliebigen der Ansprüche 12 bis 15, wobei zugelassen wird, dass die behandelte Geopolymer-Vorstufe aushärtet, um ein Monolith-Erzeugnis zu bilden.

17. Verfahren nach Anspruch 16, wobei zugelassen wird, dass das Aushärten während 12-48 Stunden erfolgt.

18. Verfahren nach Anspruch 16 oder 17, wobei das Gemisch während des Aushärte-Vorgangs erhitzt wird.

19. Verfahren nach Anspruch 18, wobei eine Temperatur zwischen der Umgebungstemperatur und 800 °C verwendet wird.

20. Verfahren nach einem beliebigen vorangehenden Anspruch, wobei Klinoptilolith mit einer Natriumsilicat, Natriumhydroxid und destillier-tes Wasser enthaltenden wässrigen Lösung behandelt wird und zu-gelassen wird, dass das sich hierbei ergebende Gemisch während 19 Stunden bei 80°C aushärtet, um ein äußerst kompaktes und stabiles hartes, festes Erzeugnis zu schaffen.

## Revendications

1. Un procédé pour la production d'un monolithe stable, ledit procédé comprenant l'encapsulation de déchets dans ledit monolithe par formation de liaisons chimiques dans le monolithe, où lesdits déchets comprennent des aluminosilicates.

2. Un procédé selon la revendication 1 où ledit monolithe comprend un monolithe géopolymère.

3. Un procédé pour l'enlèvement et le stockage de déchets, ledit procédé comprenant la production d'un monolithe stable en accord avec le procédé selon l'une des revendications 1 et 2, où lesdits déchets comprennent des aluminosilicates.

4. Un procédé selon l'une des revendications 1 à 3 où lesdits déchets sont capables d'une formation en monolithes de ciment.

5. Un procédé selon l'une quelconque des revendications 1 à 4 où lesdits déchets comprennent des précurseurs géopolymères.

6. Un procédé selon l'une quelconque des revendications précédentes où lesdits aluminosilicates comprennent des matériaux d'échange ionique.

7. Un procédé selon l'une quelconque des revendications précédentes où lesdits aluminosilicates comprennent de la clinoptilolite.

8. Un procédé selon l'une quelconque des revendications précédentes où lesdits déchets comprennent des déchets radioactifs.

9. Un procédé selon la revendication 8 où lesdits déchets radioactifs sont à l'origine contenus dans un milieu liquide et sont séparés du dit milieu liquide par traitement du dit milieu liquide avec lesdits aluminosilicates.

10. Un procédé selon la revendication 9 où ledit milieu liquide comprend un environnement aqueux.

11. Un procédé pour séparer des déchets radioactifs d'un milieu liquide, ledit procédé comprenant l'exécution, dans l'ordre, des étapes suivantes :
(a) traitement du dit milieu liquide avec un matériau d'échange ionique ; et
(b) traitement du dit matériau d'échange ionique par le procédé selon la revendication 6.

12. Un procédé selon l'une quelconque des revendications 5 à 11 qui comprend le traitement d'un précurseur géopolymère avec un initiateur de durcissement.

13. Un procédé selon la revendication 12 où ledit précurseur géopolymère comprend un matériau d'échange ionique.

14. Un procédé selon l'une des revendications 12 et 13 où ledit initiateur durcisseur comprend un silicate.

15. Un procédé selon l'une des revendications 13 et 14 où ledit matériau d'échange ionique est traité avec une solution alcaline d'un silicate.

16. Un procédé selon l'une quelconque des revendications 12 à 15 où on fait durcir le précurseur géopolymère pour former un produit monolithique.

17. Un procédé selon la revendication 16 où on effectue le durcissement en 12-48 heures.

18. Un procédé selon l'une des revendications 16 et 17 où le mélange est chauffé pendant le processus de durcissement.

19. Un procédé selon la revendication 18 où est utilisée une température comprise entre la température ambiante et 800°C

20. Un procédé selon l'une quelconque des revendications précédentes où on traite la clinoptilolite avec un solution aqueuse contentant du silicate de sodium, de l'hydroxyde de sodium et de l'eau distillée et où on durcit le mélange résultant pendant 19 heures à 80°C pour fournir un produit solide et dur, de haute cohésion et de grande stabilité.
